(19) Europäisches Patentamt

European Patent Office

Office européen des brevets

(11) **EP 2 413 263 A1**

(12) **EUROPEAN PATENT APPLICATION**
published in accordance with Art. 153(4) EPC

(43) Date of publication:
**01.02.2012 Bulletin 2012/05**

(51) Int Cl.:
*G06K 9/00* *(2006.01)*

(21) Application number: **09842118.3**

(22) Date of filing: **31.08.2009**

(86) International application number:
**PCT/ES2009/070360**

(87) International publication number:
**WO 2010/109029 (30.09.2010 Gazette 2010/39)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **24.03.2009 ES 200930006**

(71) Applicant: **Hanscan IP B.V.**
**1097JB Amsterdam (NL)**

(72) Inventors:
• **ANTEQUERA DIAZ, Nicolás**
**28108 Alcobendas (Madrid) (ES)**
• **SANCHEZ DEL RIO SAEZ, José**
**28108 Alcobendas (Madrid) (ES)**

(74) Representative: **Temino Ceniceros, Ignacio**
**Calle Amador de los Rios 1-1°**
**28010 Madrid (ES)**

(54) **3D BIOMETRIC SCANNER**

(57) Three dimensional biometric scanner (1) for the capillary mapping of the palm of the hand (2) incorporates two image sensors (5, 6) configured for obtaining a stereoscopic image of a vascular map and where for each image corresponding to each wave length, the depth of each point on the plane is known. Grouping the N images corresponding to the emitted wave N longitudes, a 3D map of the palm of the hand veins is achieved. To achieve a stereoscopic image, a fixed distance (d) between the image sensors (5,6) is needed to be able to calculate the depth of the biometric recognition element Z component.

Fig.1

**Description**

This invention refers to a three dimensional biometric scanner and its method of operation, which allows to obtain the veins structure in three dimensions through stereoscopic images of any of the hand fingers, palm of the hand or wrist in such a manner that it is able to ensure the user is a live being and can identify it.

The use of this system is indicated for controlling access, payment media security, controlling employee working hours and in general, any field which requires a biometric identification of personnel.

BACKGROUND OF THE INVENTION

Biometric scanners, which are based on acquiring a vein pattern (biometric element) of a biometric receptor (palm of hand, some of the fingers or the person's wrist) using as fundamental elements, close infrared radiation emitters (like the diode light emitters with an emitter wavelength belonging to the near infrared electromagnetic spectrum), near infrared radiation receptor elements that allow to detect this radiation or obtain the image corresponding to the vascular map of this biometric receptor, also with absorption bands centred on the near infrared and the biological and biometrical receptor (palm, finger or wrist) that interacts with the infrared radiation emitted by the light emitting source. Therefore, the near infrared radiation emitted by the light source is in part reflected and spread by the biometric receptor and in part absorbed by the haemoglobin. This reflected and spread radiation carries the 2D vascular map information corresponding to the vein structure of the user's biometric receptor and is at the same time detected by an absorption band detection system similar to the light emitting source, which enables to obtain an image of the vein pattern.

An example of this is found in document US20070098223, which describes a scanner for biometric identification based on the reading of the palm of the hand vein pattern by using near infrared radiation. Another document is US6813010, which shows an innovative finger proximity detector for optimizing the light intensity that reaches the finger in such a way that allows obtaining a clearer vein pattern. Another case is the one shown in US20070116330 where in addition to the vein identifier, it allows to also detect the presence of live tissue by using the captured pattern of the roughness of the lower skin layers that are covered by epidermis tissue.

None of the above mentioned cases describes devices and/or methods that allow to establish a three dimensional map of the vein pattern.

The use of near infrared radiation as a personal identification mechanism for detecting the blood capillary map of the palm of the hand, finger or wrist is a general biometric characteristic based on the spectroscopic interaction of the electromagnetic radiation with the epidermis of the hand, finger or wrist and allows recognizing the specific user through this biometric element. Obtaining a 3D map of the veins through the use of this mechanism deals with a global property that provides much greater information than the 2D mechanism since it also refers to the depth location of the biometric element veins, which is also a biometric data.

Currently, there are few systems on the market that incorporate sensors similar to the ones described above that read the bi-dimensional capillary maps of the corresponding biometric elements since these pose very serious problems. Among these is the high cost, which make them unfeasible in certain environments (for example, access control), the possible falsification of the 2D vein pattern and the difficult integration with high end microcontrollers.

There are systems that solve these problems and capture three dimensional maps of the capillary veins. Very few of these systems are currently on the market and none of them are used as biometric identifiers. Instead, they are used for medical purposes where the cost and size are of relative importance. An example of this is document US2001/027273, which describes a device for detecting the incidental electromagnetic radiation reflection on a biological tissue, which allows to visualize the blood vessels. In the same way, the state of the art describes a method and system for acquiring and processing biometric data like US2005/271258. However, in both cases, the problems encountered are derived from the high cost and little information regarding the depth of the vein patterns since it does not in a strict sense use a stereoscopic image, but different illumination images collected with a single camera located in a fixed location and not two cameras separated by the characteristic distance required for obtaining a three dimensional image.

As it is well known, the error rates for identifying persons are not favourable in comparison with other biometric systems like the ones based on examination of the iris. The improvements that have been achieved in the biometric sensors that obtain a map of the veins have been basically achieved by an increasing sophistication of the pattern recognition algorithms without a parallel improvement in the physical conception of the biometric system sensors. But maybe, the biggest problem for the vein sensors that have been used up to now resides in the fact that they can be "fooled" by passing false patterns by the system without the user being present.

Consequently, it is the objective of this invention to have a stereoscopic optic biometric scanner available with a high degree of reliability for identifying persons, which uses a unique operational procedure that is based on the detection of the depth levels of the different monochromatic illumination planes for each wave length used.

Another objective of this invention is to have a stereoscopic optic biometric scanner available that cannot be fooled by supplying the system with reproduced vein patterns on non live mediums.

Finally, the objective of this system is to have a compact and low cost stereoscopic optic scanner to be used on blood capillary biometric sensors like those of the user's palm of the hand, wrist or finger, in reflection (palm of the hand and wrist) as well as transmission (finger and wrist).

DESCRIPTION OF THE INVENTION

In order to solve the problems encountered in the current state of the technique, a biometric scanner has been developed that considerably increases the quantity of information to process and reliability in identification by obtaining numerous bi-dimensional vascular maps of one biometric receptor such as the palm of the hand, the wrist or fingers of different depths for a single subject, creating a three dimensional image from the conjunction of these planes thanks to suitable methods for achieving this.

The basis of the present invention resides in the fact that the biometric receptor veins are located in the space inside the tissue with a characteristic 3D distribution and ramification inside the same. Since the electromagnetic radiation penetration distance into the human body depends on the incident radiation wave length, light emitting sources with different wave lengths centred on the near IR are used to obtain the depth of the different image planes depending on the type of source emitting spectrum. The depth of the pixels for each image plane is obtained by using stereoscopic vision techniques by using two cameras located at the same height and a fixed distance between them. The final result is an image of a three dimensional map in the means configured for the three dimensional reconstruction of the biological receptor vascular map image by joining the different image planes (each with its own characteristic depth) that have been obtained for each used wave length.

Thanks to the device described herein, the proposed objectives for improving reliability in the identification and detection of life for a specific person are simultaneously reached.

As far as the objective for obtaining a device that is compact and low cost, this objective is reached by employing emitting elements (light sources) based on LED or low power semiconductor lasers, photodiodes as receptors and CCD cameras or CMOS sensors with an absorption spectrum centred in the near IR. All these elements can be easily purchased at a relatively low cost.

The operation of the three dimensional biometric scanner is the following: Due to the fact that the vein maps obtained with a CCD or CMOS type camera with an absorption spectrum centred in the near IR range are flat bi-dimensional images and run the risk (although not a high risk) of being falsified, two cameras with a high absorption efficiency in the near IR will be used that allow to obtain these vein maps in 3D by reconstructing the image planes obtained for each used wave length. These cameras receive the near IR radiation emitted by the light source (LED or low power lasers) that is reflected or transmitted by the biological receptor and are separated by a fixed distance. Each image plane received depends on the wave length used during the emission for each LED set and has a specific depth. This depth can be calculated from this given distance in such a way that if the global coordinate system is made to coincide with the camera's coordinate system, the XY plane of the image is aligned with the XY plane of the global coordinate system, the Z coordinate of a three dimensional point is the same for both coordinate systems. Precisely this Z coordinate is the one needed for each image plane obtained for each wave length emitted by the light sources. In this calculation, the base line and focal distances must also be known. Correcting the aberration by using a reverse projection matrix (calibration of the cameras) is required in order to not make mistakes when calculating the depth.

Depending on whether or not you want to obtain stereoscopic biometric information of a user's finger, wrist or palm of the hand, both cameras receive a near IR radiation emitted by the light sources that transmit through the finger or is reflected from the palm of the hand or wrist of the user. Therefore, its position depends on whether or not the image sensor (the camera) is a reflection or transmission type even though the distance between them must be maintained constant.

Therefore, in the case of the palm of the hand reflection type biometric sensor, both cameras must be placed just underneath the hand and at the same level with the light sources. However, for the transmission type biometric sensor for the user's finger, both cameras must be placed opposite the light sources with the biometric receptor between the sources and cameras. Finally, in the case of the reflection type biometric sensor for the wrist, both cameras must be located at the same height as the light sources. The 3D image is reconstructed by using the planes that have been obtained with different depths.

In the case of light sources that emit laser radiation, due to the fact that the emission length has a very narrow peak, the depth of each of the image planes is practically the same for the pixels of each plane. In this case, it is necessary to use a radiation diffuser so that the illumination of the biometric element is homogeneous and not spots of light. However, if the radiation emission source is LED, then an absorption band instead of an emission peak exists and therefore, the pixels have a different depth for each image plane. Each group of radiation sources of a determined wave length emits in a stroboscopic way with an emission period. During the three dimensional image reconstruction phase, the pixels for each of the planes that have the same depth are combined, creating a stereoscopic image of the blood capillary map.

The device described herein solves the technical problems posed in the state of the art. The veins map is hidden and is unique to each user. Falsification is only possible by stealing the device. The fact of obtaining a Z coordinate that indicates the depth of the blood capillaries increases the security of the vein sensors in a large degree, making it very difficult for it to be falsified by any "hacker". The amount of three dimensional information available is directly proportional to the number of wavelengths employed in the illumination.

BRIEF DESCRIPTION OF THE FIGURES

The following, in a brief way describes a series of drawings that help to better understand this invention. These drawings are expressly related to the embodiment of this invention and provide an illustrated example that is not intended to limit this invention.

FIG. 1 shows a schematic view of the three dimensional biometric scanner, purpose of this invention, applied over the palm of the hand, including an amplified image of the illumination plate where the cameras are located.

FIG. 2 shows a schematic view of the three dimensional biometric scanner, purpose of this invention, applied over a single finger.

FIG. 3 shows a schematic view of the three dimensional biometric scanner, purpose of this invention, applied over the wrist.

FIG. 4 graphically shows how a stereoscopic image is obtained to make up the veins map, which is the main purpose of the scanner in this invention.

PREFERRED EMBODIMENT OF THE INVENTION

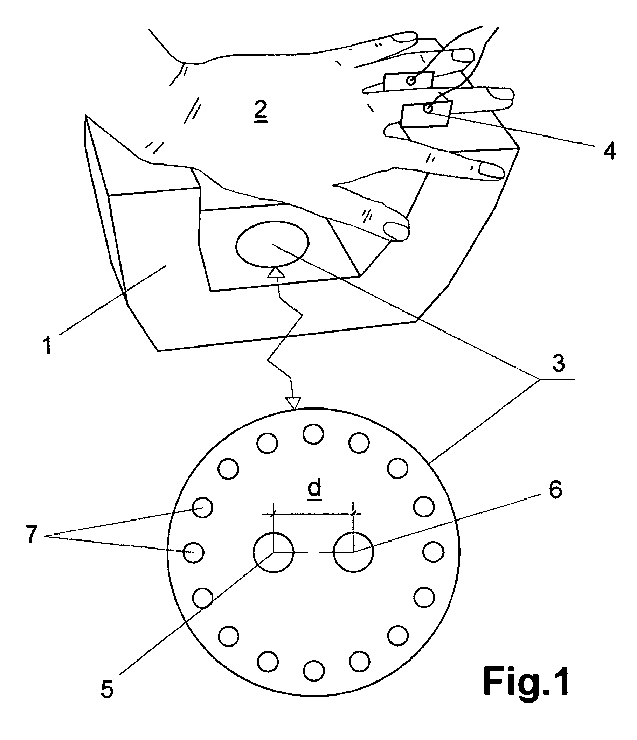

As can be seen in figure 1, the three dimensional biometric scanner (1) for the capillary map of the palm of hand (2) has two image sensors (5,6) configured for obtaining a stereoscopic image of a vascular map and where for each image corresponding to each wave length, the depth of each point on the plane is known. Grouping the N images corresponding to the emitted wave N longitude, a 3D map is achieved of the palm of hand veins. To achieve a stereoscopic image, a fixed distance (d) between the image sensors (5,6) is needed to be able to calculate the depth of the biometric recognition element Z component.

The image sensors (5,6) are integrated in an illumination plate (3) composed of many near IR radiation emitters (7) that enable to extract the veins pattern by the reflection of this radiation on the characteristic biometric element. In the case that these were LED, the homogeneous illumination pattern in the biometric element is easier to correct since the quasi-chromatic beam has an angular aperture between 20° and 80°, which is much greater than in lasers. In this situation, the pixel depth of each quasi-monochromatic image varies ($z_i \pm \Delta z_i$) due to the emission band presented by the LEDs ($\ddot{e}_i \pm \Delta \lambda_i$) with respect to the monochromatic line of the lasers. If lasers are used, diffusers will need to be used that open the beam to correct the homogeneous illumination and the monochromatic image patterns that have pixels with a depth similar to ($\lambda_i, z_i$).

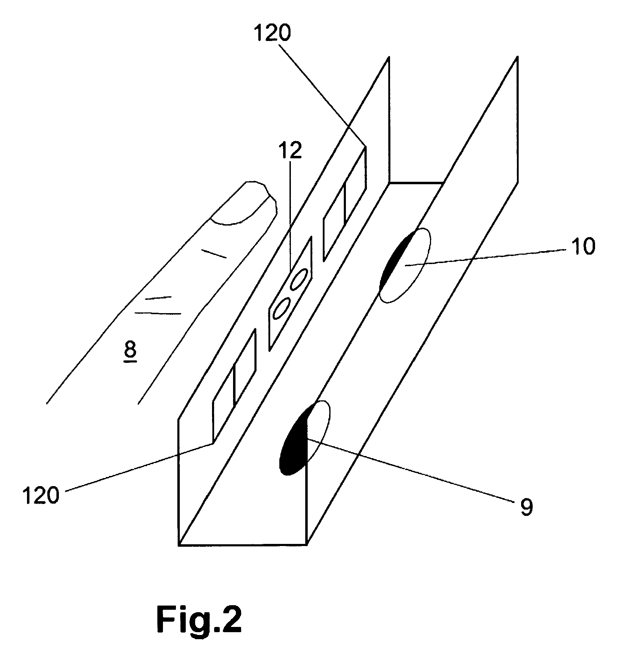

Figure 2 shows this invention in a case where the measurement is performed on the finger (8). Again, two image sensors are needed (9,10), placed at a fixed distance between them in order to obtain a 3D image of the capillary map (11) of the finger (8). In this case, the near infrared radiation emitted by the LED (or lasers if applicable) (12) with an emission band centred in the near IR is detected by these image sensors (9, 10) that have an absorption band that affects the emission of the light sources (12). These sources can also be used as presence and/or life detectors in terms of the near IR radiation reflection and transmission pattern that interacts with the finger (8), which is simultaneously detected by the photoreceptors (120) that are positioned next to them. The near IR radiation is absorbed by the blood's haemoglobin and transmitted through the finger (8) in such a way that a 3D image of its capillary map is obtained through the two image sensors (9,10) and based on the composition of the different images obtained for each wave length emitted by the set of light sources (12).

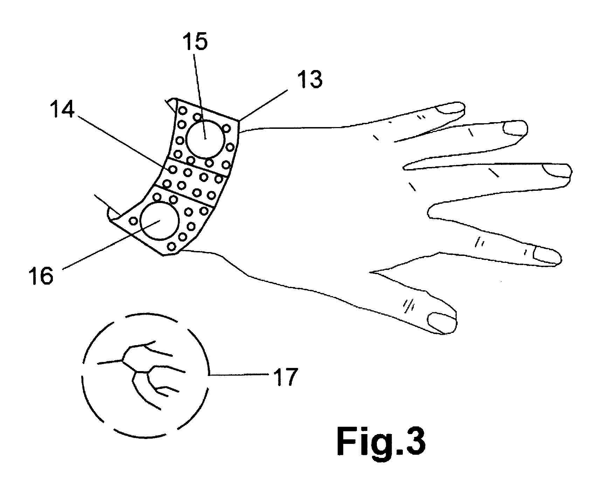

Figure 3 shows a view of the scanner purpose of this invention performing a reading of the capillary map (17) of the user's wrist (13). A light source matrix (14) (that can be LED or low power lasers) emits radiation in the near IR and interacts with the biometric element (13) -in this case the wrist- reflecting off of it or transmitting through it. Next to this light source matrix (14) and at a fixed distance, two image sensors (15,16) will be placed to absorb the IR radiation and allow to create a three dimensional capillary map (17) of the wrist (13) by using image comparison means.

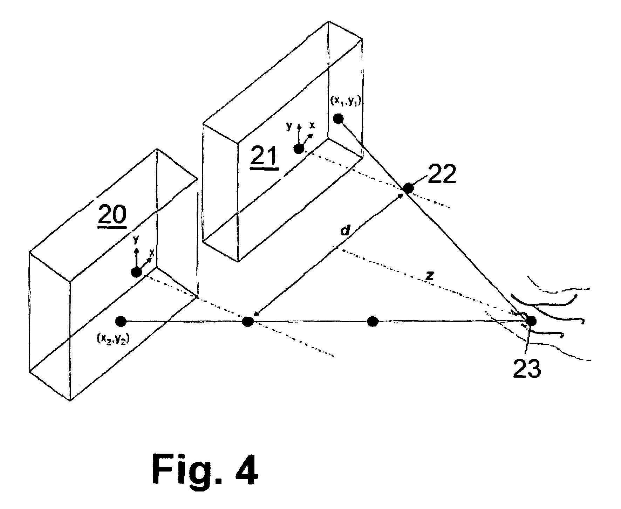

For the three mentioned embodiments as can be seen in figure 4, the stereoscopic image involves the capturing of two separate images of the same object (20,21) corresponding with a single point w (23) of the three dimensional space. The distance (d) between the two lenses (22) is the so called base line, which must be constant. The (X, Y, Z) coordinates must be calculated for point w (23), which has the coordinates $(x_1, y_1)$ and $(x_2, y_2)$ on both images (20,21). In this figure, it is assumed that the image sensors are identical and that their respective coordinate systems differ exclusively in the position of their origins. The Z coordinate of w is the same for the coordinate systems of both cameras and it is the parameter to calculate for each pixel of the veins map image. It is calculated using the following equation [1]:

$$Z = f - \frac{f \cdot d}{x_2 - x_1} \qquad [1]$$

with f being the centre of the lens with the centre of the image at the origin.

The interaction mechanism of the electromagnetic radiation with the human epithelial tissue is based on the fact that the penetration depth of this radiation varies as per Lambert's Law, which is defined in equation [2]:

$$(\lambda, t) = I_0(\lambda) \cdot e^{\left(-\left(\Sigma_v \llbracket (\sigma_i(Hb_i v)(\lambda) s_i(\llbracket Hb \rrbracket_i v))z(t) \rrbracket\right)\right)} \qquad [2]$$

where the intensity of $I_0$ and A is the wave length of the incident radiation, $C_{HB}(\lambda)$ and $S_{HB}(\lambda)$ is the absorption coefficient of the wave length depending on each Hb derivative (or biological components of the material with which the electromagnetic radiation interacts) and Z describes the penetration depth. Therefore, the penetration depth shows a logarithmic variation with the input and output intensity coefficients being directly proportional to the interaction radiation wave length. Therefore, for each set of radiation sources of the same emission wave length ($\lambda_i$), the penetration depth ($z_i$) is similar for all the points of the hand (depending on the emission band) and is reflected carrying the existing vein pattern information up to where it has penetrated. This penetration depth has been calculated by using the before mentioned vision algorithm thanks to two cameras that allow for a stereoscopic vision. Using the other sets of wave lengths, other images are achieved with different depths that are put together for this purpose, creating the 3D image of the chosen vein pattern.

The user places the biological element in question over the biometric sensor. In this situation, the light sources start to emit electromagnetic radiation in a stroboscopic and sequential way; first a group of a determined wave length and later, other groups with different wave lengths. For each group of emission sources, the two cameras that are positioned like a set of human eyes to achieve the stereoscopic vision capture the map corresponding to the interaction radiation (reflection or transmission along with scattering). A processing unit extracts the vein map and their depths, labelling them with their corresponding emission wave length. The process is repeated as many times as emission wave lengths exist in the illumination system. After they have been labelled, the vein maps are grouped according to the depth of each of the veins extracted from the different maps and in this way obtaining a three dimensional capillary map. Generally, the identification process is intended to be quick and always safe. To accomplish this, a random number of emission wave lengths are the ones that work and not all of them. Therefore, the comparison process is performed only with those labelled vein maps.

In the case of radiation sources with different wave lengths (Quasi-monochromatic LED) it is possible to use UV-A emission radiation without excessively increasing the price of the biometric system. Biological properties of human epithelial tissue are studied in this way; all you need is for the image reception system (CCD or CMOS sensor) to be sensitive to the UV-A electromagnetic spectrum. The procedure is similar to the one described in the paragraph above except that the wave lengths used are lower than the ones used before (300-400 nm) and the number used is directly proportional to the penetration depth of the biological information (reflection, absorption, human tissue transmission and the blood components) that is obtained.

In general, the biometric sensors also incorporate additional security elements. For example, as an alternative option to the near infrared optic filters and as a less expensive measure to take, two crossed lineal polarized laminates in the visual range (or in the near IR even though it increases the system cost) can be used, which are placed over the camera lens, just like the optic filters. If the polarizers are placed over the light sources with the crossed polarization axis with respect to the previous ones, the receptor only captures the reflected or transmitted radiation, whose initial polarization state has varied after interacting with the biometric element. Another option is to use pulse oximeters that are based on time and amplitude measurements where the intensity of the light passes through the thin tissue e.g., through the end of the finger using red wave longitudes (630nm) and near IR (940nm) and the previously mentioned Bert-Lambert law. Previously, the illumination control process for the subsequent capturing of the user's palm of the hand veins map, the pulsometer detects the saturated oxygen concentration in blood and the pulse. If the detected values are outside the characteristic human threshold, the sensor will not capture the biometric receptor veins map and will tell the user to place the hand correctly over the sensor. Also as a security measure, the electrical properties such as impedance and capacitance of the hand tissue can be measured by using electrodes with an alternate current of 800µA and 50kHz.

**Claims**

1.  Three dimensional biometric scanner of the type that obtains a vascular map of the user's palm of the hand, wrist or fingers, **characterized** for having
    a plurality of light sources that are located within the near infrared absorption band and
    at least two image sensors that are sensitive to this near infrared band with a fixed distance between them and located at the same height
    where, for each emission wave length, a labelled and registered image is obtained in a processing element for a determined depth; this processing element at the same time incorporates a means for reconstructing three-dimensional maps; these means are configured for reconstructing the different three-dimensional images obtained by combining image points of a determined depth for each emission wave length.

2.  Scanner as per claim 1 where the image sensors are sensitive to the UV-A electromagnetic spectrum in such a way as to obtain the optic tissue properties and blood components.

3.  Scanner as per clams 1 and 2 that incorporates additional security elements (4) against possible fraud, where these elements are at least one selected from the following:

    a blood pulse and oxygen concentration saturation in blood detector; bio-impedance readers; temperature sensors and visible lineal and near IR polarizers, which are positioned with the crossed polarized axis over the light source and the image sensor lenses configured to detect the change in polarization of the light as it interacts with the biometric element.

4.  Biometric identification system **characterized in that** it incorporates the biometric scanner of claims 1 and 3.

**Fig.1**

**Fig.2**

**Fig.3**

# Fig. 4

# INTERNATIONAL SEARCH REPORT

| International application No. |
|---|
| PCT/ ES 2009/070360 |

A. CLASSIFICATION OF SUBJECT MATTER

*G06K 9/00* (2006.01)

According to International Patent Classification (IPC) or to both national classification and IPC

B. FIELDS SEARCHED

Minimum documentation searched (classification system followed by classification symbols)
G06K

Documentation searched other than minimum documentation to the extent that such documents are included in the fields searched

Electronic data base consulted during the international search (name of data base and, where practicable, search terms used)

INVENES, EPODOC, WPI, TXTEN

C. DOCUMENTS CONSIDERED TO BE RELEVANT

| Category* | Citation of document, with indication, where appropriate, of the relevant passages | Relevant to claim No. |
|---|---|---|
| Y | US 2007206098 A1 (MATSUO et al.) 06.09.2007, abstract; paragraphs [6-16]; paragraphs [63-95]; paragraphs [100-107]; figures 1-7 and 19-22. | 1 - 4 |
| Y | US 2008285812 A1 (RENSEN et al.) 20.11.2008, abstract; paragraphs [45-46]; paragraph [52]; figures 1 and 4. | 1 - 4 |
| A | US 2005271258 A1 (ROWE) 08.12.2005, abstract; paragraphs [42-48]; paragraphs [65-70]. | 2 - 4 |
| Y | US 2001027273 A1 (FLOCK et al.) 04.10.2001, abstract; paragraphs [2-3]; paragraph [19]; paragraph [25]; paragraph [29]; figure 5, paragraphs [40-42]. | 1 - 4 |
| A | US 5719950 A (OSTEN et al.) 17.02.1998, abstract;column 2, line 18 - column 4, line 42. | 2 - 4 |

☐ Further documents are listed in the continuation of Box C.      ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | |
| | "&" document member of the same patent family |

| Date of the actual completion of the international search | Date of mailing of the international search report |
|---|---|
| 30 December 2009      (30.12.2009) | **(08/01/2010)** |
| Name and mailing address of the ISA/ O.E.P.M. | Authorized officer |
| | A. Figuera González |
| Paseo de la Castellana, 75 28071 Madrid, España. Facsimile No.   34 91 3495304 | Telephone No. +34 91 349 55 16 |

Form PCT/ISA/210 (second sheet) (July 2009)

## INTERNATIONAL SEARCH REPORT
Information on patent family members

International application No.

PCT/ ES 2009/070360

| Patent document cited in the search report | Publication date | Patent family member(s) | Publication date |
|---|---|---|---|
| US 2007206098 A | 06.09.2007 | CN 101030245 A | 05.09.2007 |
| | | CN 100533463 C | 26.08.2009 |
| | | EP 1830305 AB | 05.09.2007 |
| | | KR 20070090725 A | 06.09.2007 |
| | | JP 2007229360 A | 13.09.2007 |
| | | | 13.09.2007 |
| US 2008285812 A | 20.11.2008 | WO 2005111916 A | 24.11.2005 |
| | | KR 20070015198 A | 01.02.2007 |
| | | EP 1751691 A | 14.02.2007 |
| | | CN 1954330 A | 25.04.2007 |
| | | CN 100423018 C | 01.10.2008 |
| | | JP 2007537526 T | 20.12.2007 |
| | | | 20.12.2007 |
| | | | 20.12.2007 |
| US 2005271258 A | 08.12.2005 | US 2005265586 A | 01.12.2005 |
| | | US 7394919 B | 01.07.2008 |
| | | US 2005265585 A | 01.12.2005 |
| | | US 7539330 B | 26.05.2009 |
| | | US 7460696 B | 02.12.2008 |
| | | US 2006062438 A | 23.03.2006 |
| | | US 2006110015 A | 25.05.2006 |
| | | US 7627151 B | 01.12.2009 |
| | | AU 2006203899 A | 13.07.2006 |
| | | WO 2006074407 A | 13.07.2006 |
| | | CA 2593007 A | 13.07.2006 |
| | | WO 2006093508 A | 08.09.2006 |
| | | CA 2569440 A | 08.09.2006 |
| | | AU 2005328364 A | 08.09.2006 |
| | | US 2006274921 A | 07.12.2006 |
| | | US 7545963 B | 09.06.2009 |
| | | US 2007030475 A | 08.02.2007 |
| | | US 2007116331 A | 24.05.2007 |
| | | US 7508965 B | 24.03.2009 |
| | | EP 1789908 A | 30.05.2007 |
| | | EP 1839233 A | 03.10.2007 |
| | | KR 20070103753 A | 24.10.2007 |
| | | JP 2008501196 T | 17.01.2008 |
| | | CN 101124588 A | 13.02.2008 |
| | | JP 2008527544 T | 24.07.2008 |
| | | US 2008298649 A | 04.12.2008 |
| | | US 2009092290 A | 09.04.2009 |
| | | US 2009148005 A | 11.06.2009 |
| US 2001027273 A | 04.10.2001 | WO 9639925 A | 19.12.1996 |
| | | CA 2223089 AC | 19.12.1996 |
| | | AU 5929696 A | 30.12.1996 |
| | | EP 0830077 AB | 25.03.1998 |
| | | AU 706419 B | 17.06.1999 |
| | | JP 11509748 T | 31.08.1999 |

Form PCT/ISA/210 (patent family annex) (July 2009)

## INTERNATIONAL SEARCH REPORT

Information on patent family members

International application No.

PCT/ ES 2009/070360

| Patent document cited in the search report | Publication date | Patent family member(s) | Publication date |
|---|---|---|---|
| | | JP 3734508 B | 11.01.2006 |
| | | US 6032070 A | 29.02.2000 |
| | | EP 1066791 AB | 10.01.2001 |
| | | AT 200020 T | 15.04.2001 |
| | | ES 2156280 T | 16.06.2001 |
| | | DK 830077 T | 18.06.2001 |
| | | US 6272374 B | 07.08.2001 |
| | | US 7006861 B | 28.02.2006 |
| | | DE 69612283 T | 08.11.2001 |
| | | AT 282985 T | 15.12.2004 |
| | | EP 1514510 A | 16.03.2005 |
| | | HK 1032520 A | 20.05.2005 |
| | | DE 69633946 T | 02.03.2006 |
| US 5719950 A | 17.02.1998 | WO 9526013 A | 28.09.1995 |
| | | CA 2183886 AC | 28.09.1995 |
| | | AU 2186095 A | 09.10.1995 |
| | | EP 0752143 AB | 08.01.1997 |
| | | BR 9507142 A | 30.09.1997 |
| | | JP 9510636 T | 28.10.1997 |
| | | ES 2110841 T | 16.02.1998 |
| | | DE 69501327 T | 23.07.1998 |
| | | | 23.07.1998 |

Form PCT/ISA/210 (patent family annex) (July 2009)

**EP 2 413 263 A1**

**REFERENCES CITED IN THE DESCRIPTION**

**Patent documents cited in the description**

- US 20070098223 A
- US 6813010 B
- US 20070116330 A
- US 2001027273 A
- US 2005271258 A